(19) Europäisches Patentamt
European Patent Office
Office européen des brevets

(11) EP 0 723 980 B1

(12) **EUROPÄISCHE PATENTSCHRIFT**

(45) Veröffentlichungstag und Bekanntmachung des Hinweises auf die Patenterteilung:
**02.09.1998 Patentblatt 1998/36**

(51) Int Cl.6: **C08F 212/08**, C08F 222/40, C08F 279/02, C08L 55/02

(21) Anmeldenummer: **96100405.8**

(22) Anmeldetag: **12.01.1996**

(54) **Thermoplaste mit hoher Wärmeformbeständigkeit und verbesserter Thermostabilität**

Thermoplastic moulding materials with improved thermostability

Masses de moulage thermoplastiques à stabilité thermique améliorée

(84) Benannte Vertragsstaaten:
**BE DE ES FR GB IT NL**

(30) Priorität: **25.01.1995 DE 19502200**

(43) Veröffentlichungstag der Anmeldung:
**31.07.1996 Patentblatt 1996/31**

(73) Patentinhaber: **BAYER AG**
**51368 Leverkusen (DE)**

(72) Erfinder:
- **Piejko, Karl-Erwin, Dr.**
  **D-51467 Bergisch Gladbach (DE)**
- **Eichenauer, Herbert, Dr.**
  **D-41539 Dormagen (DE)**
- **Groth, Torsten, Dr.**
  **D-51061 Köln (DE)**
- **Käsbauer, Josef, Dr.**
  **D-42929 Wermelskirchen (DE)**
- **König, Bernd-Michael, Dr.**
  **D-51467 Bergisch Gladbach (DE)**

(56) Entgegenhaltungen:

| | |
|---|---|
| **EP-A- 0 204 548** | **EP-A- 0 295 012** |
| **EP-A- 0 628 578** | **WO-A-88/02380** |
| **US-A- 4 151 224** | **US-A- 4 444 969** |

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 723 980 B1

Printed by Jouve, 75001 PARIS (FR)

## Beschreibung

ABS-Polymerisate sind Thermoplaste, die sich im allgemeinen durch eine Kombination guter Eigenschaften wie hohe Zähigkeit, hohen E-Modul, gute Fließfähigkeit und guten Oberflächenglanz auszeichnen.

Werden neben diesen Eigenschaften auch sehr hohe Werte für die Wärmestandfestigkeit gefordert, so müssen bei der ABS-Herstellung Monomerkomponenten eingesetzt werden, die zu einer Erhöhung der Glasübergangstemperatur und damit auch zu einer höheren Wärmeformbeständigkeit führen. Geeignete derartige Monomere sind z.B. α-Methylstyrol (vgl. z.B. US 3 111 501); Acrylamid (vgl. z.B. EP-A 0 330 038), Maleinsäureanhydrid (vgl. z.B. DE-OS 33 32 326) oder Maleinimid (vgl. z.B. US 3 721 724).

Nachteile beim Einbau dieser Monomere sind die nur relativ geringe Effektivität von α-Methylstyrol oder die Neigung zu unerwünschten Nebenreaktionen, wie z.B. Vernetzung bei Verwendung von Acrylamid, Maleinsäureanhydrid oder Maleinimid.

Eine Gruppe von Comonomeren, die diese Nachteile nicht zeigt und gleichzeitig zu Produkten mit hoher Wärmeformbeständigkeit führt, sind N-substituierte Maleinimide und hierbei insbesondere N-Phenylmaleinimid (vgl. z.B. US 4 567 233 und dort zitierte Literatur). Die Erhöhung der Wärmeformbeständigkeit durch N-substituierte Maleinimide ist im allgemeinen geringer als durch unsubstituiertes Maleinimid (siehe z.B. US 3 721 724). Aufgrund eines relativ geringen Verlustes an Wärmeformbeständigkeit sind Aryl-substituierte Maleinimide besonders günstig; allgemein üblich in der technischen Anwendung hat sich N-Phenylmaleinimid durchgesetzt.

Ein Nachteil der diesen Monomerbaustein enthaltenden Polymerisate ist allerdings eine verminderte thermische Beständigkeit, die sich insbesondere in einer mit steigender Verarbeitungstemperatur verstärkt auftretenden Verfärbung zeigt und die Anwendbarkeit der Polymerisate stark einschränken kann.

Bekannt sind weiterhin am Aromaten substituierte N-Aryl-Maleinimide wie z.B. N-o-Chlorphenylmaleinimid oder verschiedene Aryl-, Alkyl- oder cyclische Substituenten (siehe z.B. US 3 652 726 oder DE-OS 4 321 344) am N-Arylrest. Halogenhaltige Monomere, wie z.B. N-o-Chlorphenylmaleinimid besitzen jedoch den Nachteil, daß die daraus hergestellten Polymerisate bei thermischer Belastung zur Bildung toxischer Abbauprodukte führen können, weshalb technische Thermoplaste heute vorzugsweise halogenfrei sind.

Höhere Verarbeitungstemperaturen sind häufig bei großen Praxisformteilen notwendig, um gleichmäßige Wandstärken und über das Formteil homogene Eigenschaften zu erhalten. Es besteht deshalb ein Bedarf an Modifikatoren zur Verbesserung der Wärmeformbeständigkeit von ABS-Formmassen, die die günstigen Eigenschaften der N-substituierten Maleinimide besitzen, jedoch zu geringeren Verfärbungen bei höheren Verarbeitungstemperaturen neigen.

Es wurde nun gefunden, daß bei Einsatz eines am aromatischen Ring speziell substituierten N-Phenylmaleinimids Polymerisate mit hoher Wärmeformbeständigkeit und ausgezeichneter Thermostabilität erhalten werden.

Gegenstand der Erfindung sind Thermoplaste, aufgebaut aus N-(2-Ethyl-6-methyl)phenylmaleinimid und Styrol, wobei das Styrol ganz oder teilweise durch mindestens eine Monomerkomponente, vorzugsweise ausgewählt aus Acrylnitril, Methylmethacrylat und α-Methylstyrol, ersetzt sein kann.

Bevorzugte Thermoplastharze sind aufgebaut aus N-(2-Ethyl-6-methyl)phenylmaleinimid, Styrol und Acrylnitril, besonders bevorzugte Thermoplastaharze sind aufgebaut aus

a) 5 bis 50 Gew.-Teilen, vorzugsweise 10 bis 35 Gew.-Teilen N-(2-Ethyl-6-methyl)phenylmaleinimid,

b) 20 bis 90 Gew.-Teilen, vorzugsweise 30 bis 75 Gew.-Teilen Styrol und

c) 5 bis 40 Gew.-Teilen, vorzugsweise 10 bis 30 Gew.-Teilen Acrylnitril.

Ein weiterer Gegenstand der Erfindung sind thermoplastische Formmassen von ABS-Typ, enthaltend

A) 10 bis 100 Gew.-% mindestens eines Pfropfkautschuks und

B) 90 bis 0 Gew.-% mindestens eines kautschukfreien thermoplastischen Vinylharzes,

wobei zur Herstellung von mindestens einer der Komponenten A und B als eine Monomerkomponente N-(2-Ethyl-6-methyl)phenylmaleinimid eingesetzt wurde.

Bevorzugte erfindungsgemäße thermoplastische Formmassen vom ABS-Typ enthalten

A) 10 bis 100 Gew.-% eines Pfropfkautschuks, hergestellt aus

i) 3 bis 80 Gew.-Teilen, vorzugsweise 5 bis 70 Gew.-Teilen, mindestens einer Kautschukkomponente, vorzugsweise Polybutadien, in deren Gegenwart

ii) 5 bis 50 Gew.-Teile, vorzugsweise 10 bis 35 Gew.-Teile N-(2-Ethyl-6-methyl)phenylmaleinimid und

iii) 95 bis 50 Gew.-Teile, vorzugsweise 90 bis 65 Gew.-Teile mindestens einer weiteren Monomerkomponente, ausgewählt aus Styrol, Acrylnitril, Methylmethacrylat und α-Methylstyrol polymerisiert wurden und

B) 90 bis 0 Gew.-% eines kautschukfreien thermoplastischen Vinylharzes, aufgebaut aus mindestens zwei Monomerkomponenten, ausgewählt aus Styrol, Acrylnitril, Methylmethacrylat und α-Methylstyrol

oder

A) 10 bis 95 Gew.-% eines Pfropfkautschuks, hergestellt aus

i) 3 bis 80 Gew.-Teilen, vorzugsweise 5 bis 70 Gew.-Teilen mindestens einer Kautschukkomponente, vorzugsweise Polybutadien, in deren Gegenwart

ii) 5 bis 100 Gew.-Teile, vorzugsweise 10 bis 95 Gew.-Teile, mindestens zweier Monomerkomponenten, ausgewählt aus Styrol, Acrylnitril, Methylmethacrylat und α-Methylstyrol polymerisiert wurden und

B) 90 bis 5 Gew.-% eines kautschukfreien thermoplastischen Vinylharzes, aufgebaut aus

iv) 5 bis 50 Gew.-Teilen, vorzugsweise 10 bis 35 Gew.-Teilen N-(2-Ethyl-6-methyl)phenylmaleinimid und

v) 95 bis 50 Gew.-Teilen, vorzugsweise 90 bis 65 Gew.-Teilen, mindestens einer Monomerkomponente, ausgewählt aus Styrol, Acrylnitril, Methylmethacrylat und α-Methylstyrol.

Die erfindungsgemäß bei der Herstellung der Pfropfkautschuke eingesetzten Kautschuke müssen eine Glastemperatur unterhalb von 0°C besitzen. Geeignet sind z.B.:

- Dienkautschuke, d.h. Homopolymerisate von konjugierten Dienen mit 4 bis 8 C-Atomen wie Butadien, Isopren oder deren Copolymerisate mit bis zu 60 Gew.-%, bevorzugt 1 bis 30 Gew.-%, eines Vinylmonomeren, z.B. Acrylnitril, Methacrylnitril, Styrol, α-Methylstyrol, $C_1$-$C_4$-Alkylstyrole, $C_1$-$C_6$-Alkylacrylate und -methacrylate, Alkylenglykoldiacrylate und -methacrylate sowie Divinylbenzol;

- Acrylatkautschuke, d.h. Homo- und Copolymerisate von $C_1$-$C_{10}$-Alkylacrylaten, z.B. Homopolymeriate von Ethylacrylat, Butylacrylat, 2-Ethylhexylacrylat oder Copolymerisate mit bis zu 40 Gew.-%, bevorzugt nicht mehr als 10 Gew.-% Mono-Vinylmonomeren, z.B. Styrol, Acrylnitril, Vinylbutylether, Acrylsäure(ester), Methacrylsäure (ester), Vinylsulfonsäure. Bevorzugt werden solche Acrylatkautschukhomo- bzw. -copolymerisate eingesetzt, die 0,01 bis 8 Gew.-% Divinyl- oder Polyvinylverbindungen und/oder N-Methylolacrylamid- (oder -methacrylamid)-Derivate enthalten, die als Vernetzer wirken, z.B. Divinylbenzol, Triallylcyanurat, und wobei der Kautschuk C=C-Doppelbindungen enthält;

- Terpolymer-Kautschuke, d.h. Copolymerisate aus mono-olefinischen Kohlenwasserstoffen, z.B. Ethylen, Propylen, und Dienen, z.B. Butadien, Cyclopentadien.

Bevorzugt sind Polybutadienkautschuke und SBR-Kautschuke mit bis zu 30 Gew.-% einpolymerisiertem Styrol, besonders bevorzugt ist Polybutadien.

Die Gelgehalte der erfindungsgemäß einzusetzenden Kautschukpolymerisate können in weiten Bereichen variiert werden. Bevorzugt sind gelfreie, d.h. unvernetzte Kautschuke bei Anwendung des Masse- oder Lösungsverfahrens bzw. mindestens teilvernetzte Kautschuke, vorzugsweise mit Gelgehalten von mindestens 50 %, bei Anwendung des Emulsionsverfahrens zur Herstellung der kautschukhaltigen Pfropfpolymeri sate.

Prinzipiell kann die Herstellung der Pfropfkautschuke nach allen gängigen Verfahren erfolgen, besonders bevorzugt sind die Masse- oder Lösungspolymerisation sowie die Emulsionspolymerisation.

Die Größe der Pfropfkautschukteilchen kann in weiten Grenzen variiert werden, z.B. sind prinzipiell mittlere Teilchendurchmesser von ca. 30 nm bis ca. 10 000 nm möglich. Bevorzugt sind mittlere Teilchendurchmesser von ca. 50 nm bis ca. 500 nm (Emulsionspolymerisation) bzw. von ca. 500 nm bis 5000 nm (Masse- oder Lösungspolymerisation). Hierbei bedeuten mittlere Teilchendurchmesser $d_{50}$-Werte, die durch Ultrazentrifugenmessung (vgl. W. Scholtan und H. Lange in Kolloid-Z. und Z. Polymere 250, S. 782-796 (1972)) oder durch Ausmessen elektronenmikroskopischer Aufnahmen bestimmt wurden.

Zur Herstellung der Pfropfkautschuke geeignete Pfropfmonomere sind insbesondere Styrol, Acrylnitril, Methylmethacrylat, α-Methylstyrol; als weitere Monomere, vorzugsweise in kleinen Mengenanteilen sind Verbindungen mit einer Vinylgruppe, vorzugsweise $C_1$-$C_4$-alkylsubstituierte Styrole, wie z.B. Vinyltoluol, insbesondere p-Methylstyrol, Methacrylnitril, Ester der Acrylsäure und/oder Methacrylsäure mit $C_1$-$C_8$-aliphatischen oder cycloaliphatischen Alkoholen, z.B. n-Butylacrylat oder 2-Ethylhexylacrylat, Vinylacetat, Acrylsäure, Methacrylsäure oder Mischungen daraus geeignet.

Zur Herstellung der kautschukfreien Vinylharze sind die obengenannten Monomerkomponenten ebenfalls geeignet.

Zusätzlich zu den Monomeren können sowohl bei der Herstellung der Pfropfkautschuke als auch bei der Herstellung der kautschukfreien Vinylharze Molekulargewichtsregler eingesetzt werden, vorzugsweise in Mengen von 0,05 bis 2 Gew.-%, besonders bevorzugt in Mengen von 0,1 bis 1 Gew.-% (jeweils bezogen auf Gesamtmonomermenge). Geeignete Molekulargewichtsregler sind beispielsweise Mercaptane wie n-Dodecylmercaptan oder t-Dodecylmercaptan, dimeres α-Methylstyrol.

Die zur Herstellung der erfindungsgemäßen Thermoplastharze bzw. zur Herstellung der erfindungsgemäßen thermoplastischen Formmassen von ABS-Typ eingesetzte Monomerkomponente N-(2-Ethyl-6-methyl)phenylmaleinimid der Formel (I)

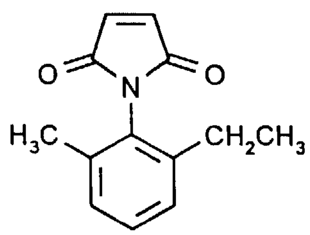

(I)

ist bekannt und z.B. von E. Jedlovska et al., Collect. Szech. Chem. Commun. 56 (1991), S. 673-684, beschrieben.

Die Herstellung der erfindungsgemäßen Thermoplaste, die von (I) abgeleitete Struktureinheiten eingebaut enthalten, erfolgt nach bekannten radikalischen Polymerisationsverfahren; bevorzugt sind die Verfahren der Masse- und Lösungspolymerisation sowie der Emulsionspolymerisation, wobei die üblichen Lösungsmittel und Hilfsstoffe (z.B. Initiatoren, Emulgatoren) zum Einsatz kommen. Die Thermoplastharze besitzen vorzugsweise mittlere Molekulargewichte $\overline{M}_w$ von 10 000 bis 300 000, besonders bevorzugt sind $\overline{M}_w$-Werte von 20 000 bis 200 000.

Beispiele für entsprechende erfindungsgemäße Thermoplastharze sind Polymerisate aus Styrol/(I)-Gemischen, α-Methylstyrol/(I)-Gemischen, Styrol/Acrylnitril/(I)-Gemischen, α-Methylstyrol/Acrylnitril/(I)-Gemischen, Styrol/Methylmethacrylat/(I)-Gemischen, Methylmethacrylat/(I)-Gemischen, Acrylnitril/Methylmethacrylat/(I)-Gemischen, Styrol/Acrylnitril/α-Methylstyrol/(I)-Gemischen, Styrol/Acrylnitril/-Methylmethacrylat/(I)-Gemischen, bevorzugte Thermoplastharze sind aus Styrol/Acrylnitril/(I)-Gemischen aufgebaut.

Besonders bevorzugt sind Thermoplastharze, aufgebaut aus

a) 5 bis 50 Gew.-Teilen, ganz besonders bevorzugt 10 bis 40 Gew.-Teilen (I),

b) 20 bis 90 Gew.-Teilen, ganz besonders bevorzugt 30 bis 75 Gew.-Teilen Styrol und

c) 5 bis 40 Gew.-Teilen, ganz besonders bevorzugt 10 bis 30 Gew.-Teilen Acrylnitril.

Auch die Herstellung der erfindungsgemäßen thermoplastischen Formmassen von ABS-Typ, die von (I) abgeleitete Struktureinheiten eingebaut enthalten, kann nach bekannten Verfahren der radikalischen Polymerisation erfolgen. Bevorzugt sind Verfahren der Masse- und Lösungspolymerisation, bei denen vorzugsweise Pfropfkautschuke mit Kautschukgehalten von 3 bis 30 Gew.-%, besonders bevorzugt von 5 bis 20 Gew.-%, resultieren, sowie der Emulsionspolymerisation, bei der vorzugsweise Pfropfkautschuke mit Kautschukgehalten von 20 bis 80 Gew.-%, besonders bevorzugt 30 bis 70 Gew.-%, hergestellt werden. Der Gehalt an eingebautem Monomer (I) ist sowohl beim Thermoplastharz als auch bei der Formmasse von ABS-Typ frei wählbar. Im allgemeinen hängt die Menge an eingebautem Monomer (I) von der angestrebten Wärmeformbeständigkeit ab. Prinzipiell möglich ist auch die gleichzeitige Verwendung von N-(2-Ethyl-6-methyl)phenylmaleinimid und anderen Maleinimidderivaten, vorzugsweise N-Phenylmaleinimid, zur Herstellung von kautschukfreien oder kautschukhaltigen Thermoplastharzen.

Den erfindungsgemäßen Polymerisaten bzw. Formmassen können bei Herstellung, Aufarbeitung, Weiterverarbeitung und Endverformung die erforderlichen bzw. zweckmäßigen Additive zugesetzt werden, z.B. Antioxidantien, UV-Stabilisatoren, Peroxidzerstörer, Antistatika, Gleitmittel, Entformungsmittel, Flammschutzmittel, Füll- oder Verstärkerstoffe (Glasfasern, Kohlefasern etc.), Farbmittel. Die Endverformung kann auf handelsüblichen Verarbeitungsaggregaten vorgenommen werden und umfaßt z.B. Spritzgießverarbeitung, Plattenextrusion mit gegebenenfalls anschließender Warmverformung, Kaltverformung, Extrusion von Rohren und Profilen, Kalander-Verarbeitung.

In den folgenden Beispielen sind die angegebenen Teile immer Gewichtsteile und die angegebenen Prozente immer Gewichtsprozente, wenn nicht anders angegeben.

## Beispiele

### Beispiel 1

Herstellung von Styrol/Acrylnitril/N-Aryl-Maleinimid-Polymeren

1.1 Erfindungsgemäße Polymerisate

1.1.1 Styrol/Acrylnitril/N-(2-Ethyl-6-methyl)phenylmaleinimid-Polymer (51,8/39,5/8,7 Mol-%)

In einem Reaktor wurden 916 g Wasser und 4,5 g $C_9$-$C_{18}$-Alkylsulfonsäure-Natriumsalz vorgelegt. Die Vorlage wurde auf 65°C erhitzt, mit 20 g einer Monomerenmischung wie im Zulauf 1 und 6 g einer 5,4 gew.-%igen wäßrigen Kaliupersulfatlösung versetzt. Danach wurden im Verlauf von 6 Stunden die Zuläufe 1 und 2 bei 65°C parallel zudosiert, danach wurde noch 3 Stunden lang bei 80°C gerührt.

Zulauf 1: 195 g N-(2-Ethyl-6-methyl)phenylmaleinimid 218 g Acrylnitril
562 g Styrol
2,5 g tert.-Dodecylmercaptan

Zulauf 2: 610 g Wasser
18,2 g $C_9$-$C_{18}$-Alkylsulfonsäure-Natriumsalz

Es wurde ein Latex mit einem Feststoffgehalt von 37 Gew.-% erhalten. Der Latex wurde mit phenolischem Antioxidans stabilisiert (0,2 Gew.-%, bezogen auf Feststoff) und mit einer Magnesiumsalzlösung koaguliert. Der Feststoff wurde gewaschen und getrocknet; die Polymerausbeute war quantitativ. Das Polymer besaß eine Glasübergangstemperatur $T_g$ (bestimmt mittels differentieller Thermoanalyse DTA) von 133°C.

1.1.2 Styrol/Acrylnitril/N-(2-Ethyl-6-methyl)phenylmaleinimid-Polymer (54,4/41,5/4,1 Mol-%)

Die Herstellung erfolgte analog 1.1.1, die Glasübergangstemperatur $T_g$ betrug 125°C.

1.2 Vergleichspolymerisate

Analog der Rezeptur 1.1.1 wurden Styrol/Acrylnitril/N-Aryl-Maleinimid-Polymerisate mit folgenden Imiden (Mol-%-Gehalt) hergestellt:

| | | | $T_g$ [°C] |
|---|---|---|---|
| 1.2.1 | N-Phenylmaleinimid | (10,6) | 134 |
| 1.2.2 | N-2,6-Diethylphenylmaleinimid | (8,2) | 131 |
| 1.2.3 | N-3-Methylphenylmaleinimid | (9,9) | 133 |
| 1.2.4 | N-2-Isopropylphenylmaleinimid | (8,7) | 135 |
| 1.2.5 | N-2,6-Dimethylphenylmaleinimid | (9,2) | 139 |

### Beispiel 2

ABS-Formmassen

45 Teile der Terpolymerisate 1.1 bzw. 1.2 wurden mit 25 Teilen Styrol/Acrylnitril-Copolymer (Gew.-Verhältnis 72/28, $\overline{M}_w$ = 95 000 g/Mol) und 30 Teilen eines ABS-Pfropfpolymeren mit einem Polybutadienkautschukgehalt von 55 Gew.-% und einer Styrol/Acrylnitril-Copolymer-Pfropfhülle gemischt. Der Polybutadienkautschuk besaß einen mittleren Teilchendurchmesser von 410 nm und wurde in Emulsion nach bekannten Verfahren mit einem Styrol/Acrylnitril-Gemisch (Gew.-Verhältnis 72:28) gepfropft. Der Mischung wurden 2 Teile eines Verarbeitungshilfsmittels (Pentaerythrit-tetrastearat) zugesetzt, wonach bei 200°C auf einem Innenkneter bis zur Bildung einer homogenen Masse geknetet wurde. Die Masse wurde gewalzt, granuliert und auf einer Spritzgießmaschine bei 240°C und 300°C zu Prüfkörpern (80 mm x 10 mm x 4 mm) verarbeitet. Die mechanischen Eigenschaften der Prüfkörper lagen jeweils auf einem für wärmeformbeständige ABS-Formmassen guten Niveau.

Beurteilt wurde die Eigenfarbe der Prüfkörper nach einem visuellen Verfahren.

Tabelle 1

| Beurteilung der Eigenfarbe von ABS-Prüfkörpern, enthaltend Polymere 1.1 und 1.2 (Vergleichspolymere) | | | |
|---|---|---|---|
| ABS-Formmasse | Polymertyp in der ABS-Formmasse | Stufe der Eigenfarbe *) bei Verarbeitungstemperaturen | |
| | | 240°C | 300°C |
| 2.1 | 1.1.1 | 3 | 4 |
| 2.2.1 | 1.2.1 | 8 | 8 |
| 2.2.2 | 1.2.2 | 4 | 7 |
| 2.2.3 | 1.2.3 | 6 | 8 |
| 2.2.4 | 1.2.4 | 6 | 7 |
| 2.2.5 | 1.2.5 | 4 | 7 |

*) Skala von 1 bis 10, 1 = sehr helle Eigenfarbe (fast weiß)
10 = sehr dunkle Eigenfarbe (dunkelbraun)

Aus dem Vergleich der Glasübergangstemperaturen des Polymerisats 1.1.1 und der Vergleichspolymerisate 1.2.1 bis 1.2.5 erkennt man im Rahmen der Meßgenauigkeit keinen signifikanten Einfluß der Substituenten am Phenylring des jeweils verwendeten N-Arylmaleinimids auf die Erweichung, d.h. zur Verbesserung der Wärmeformbeständigkeit von ABS-Formmassen sind alle untersuchten N-Aryl-maleinimide gleich gut geeignet.

Aus der Beurteilung der Eigenfarbe der mit dem erfindungsgemäßen Polymerisat 1.1.1 und den Vergleichspolymerisaten 1.2.1 bis 1.2.5 hergestellten ABS-Formmassen 2.1 und 2.2.1 bis 2.2.5 ergibt sich die deutlich beste Eigenfarbe bei dem Prüfkörper aus der Formmasse 2.1 bereits bei der niedrigen Verarbeitungstemperatur von 240°C. Bei höheren Temperaturbelastungen (Verarbeitungstemperatur 300°C) wird die hohe Thermostabilität der erfindungsgemäßen Formmasse gegenüber den Vergleichsformmassen besonders deutlich.

**Patentansprüche**

1. Thermoplaste, aufgebaut aus N-(2-Ethyl-6-methyl)phenylmaleinimid und Styrol, wobei das Styrol ganz oder teilweise durch mindestens eine weitere Monomerkomponente ersetzt sein kann.

2. Thermoplaste nach Anspruch 1, aufgebaut aus N-(2-Ethyl-6-methyl)phenylmaleinimid und Styrol, wobei das Styrol ganz oder teilweise durch mindestens eine Monomerkomponente, ausgewählt aus Acrylnitril, Methylmethacrylat und $\alpha$-Methylstyrol ersetzt sein kann, bevorzugt aufgebaut aus N-(2-Ethyl-6-methyl)phenylmaleinimid, Styrol und Acrylnitril.

3. Thermoplaste nach Anspruch 2, aufgebaut aus

   a) 5 bis 50 Gew.-Teilen N-(2-Ethyl-6-methyl)phenylmaleinimid,

   b) 20 bis 90 Gew.-Teilen Styrol und

   c) 5 bis 40 Gew.-Teilen Acrylnitril.

4. Thermoplaste nach Anspruch 3, aufgebaut aus

   a) 10 bis 35 Gew.-Teilen N-(2-Ethyl-6-methyl)phenylmaleinimid,

   b) 30 bis 75 Gew.-Teilen Styrol und

c) 10 bis 30 Gew.-Teilen Acrylnitril.

**5.** Thermoplastische Formmassen vom ABS-Typ, enthaltend

A) 10 bis 100 Gew.-% mindestens eines Pfropfkautschuks und

B) 90 bis 0 Gew.-% mindestens eines kautschukfreien thermoplastischen Vinylharzes,

wobei zur Herstellung von mindestens einer der Komponenten A und B als eine Monomerkomponente N-(2-Ethyl-6-methyl)phenylmaleinimid eingesetzt wurde.

**6.** Thermoplastische Formmassen vom ABS-Typ nach Anspruch 5, enthaltend

A) 10 bis 100 Gew.-% eines Pfropfkautschuks, hergestellt aus

i) 3 bis 80 Gew.-Teilen mindestens einer Kautschukkomponente, in deren Gegenwart

ii) 5 bis 50 Gew.-Teile N-(2-Ethyl-6-methyl)phenylmaleinimid und

iii) 95 bis 50 Gew.-Teile m indestens einer weiteren Monomerkomponente, ausgewählt aus Styrol, Acrylnitril, Methylmethacrylat und α-Methylstyrol polymrisiert wurden und

B) 90 bis 0 Gew.-% eines kautschukfreien thermoplastischen Vinylharzes, aufgebaut aus mindestens zwei Monomerkomponenten, ausgewählt aus Styrol, Acrylnitril, Methylmethacrylat und α-Methylstyrol.

**7.** Thermoplastische Formmasse vom ABS-Typ nach Anspruch 6, enthaltend

A) 10 bis 100 Gew.-% eines Pfropfkautschuks, hergestellt aus

i) 5 bis 70 Gew.-Teilen mindestens eines Polybutadienkautschuks, in dessen Gegenwart

ii) 10 bis 35 Gew.-Teile N-(2-Ethyl-6-methyl)phenylmaleinimid und

iii) 90 bis 65 Gew.-Teile mindestens einer weiteren Monomerkomponente, ausgewählt aus Styrol, Acrylnitril, Methylmethacrylat und α-Methylstyrol polymerisiert wurden und

B) 90 bis 0 Gew.-% eines kautschukfreien thermoplastischen Vinylharzes, aufgebaut aus mindestens zwei Monomerkomponenten, ausgewählt aus Styrol, Acrylnitril, Methylmethacrylat und α-Methylstyrol.

**8.** Thermoplastische Formmassen vom ABS-Typ nach Anspruch 5, enthaltend

A) 10 bis 95 Gew.-% eines Pfropfkautschuks, hergestellt aus

i) 3 bis 80 Gew.-Teilen mindestens einer Kautschukkomponente, in deren Gegenwart

ii) 5 bis 100 Gew.-Teile mindestens zweier Monomerkomponenten, ausgewählt aus Styrol, Acrylnitril, Methylmethacrylat und α-Methylstyrol polymerisiert wurden und

B) 90 bis 5 Gew.-% eines kautschukfreien thermoplastischen Vinylharzes, aufgebaut aus

iv) 5 bis 50 Gew.-Teilen N-(2-Ethyl-6-methyl)phenylmaleinimid und

v) 95 bis 50 Gew.-Teilen mindestens einer Monomerkomponente, ausgewählt aus Styrol, Acrylnitril, Methylmethacrylat und α-Methylstyrol.

**9.** Thermoplastische Formmassen vom ABS-Typ nach Anspruch 8, enthaltend

A) 10 bis 95 Gew.-% eines Pfropfkautschuks, hergestellt aus

i) 5 bis 70 Gew.-Teilen mindestens eines Polybutadienkautschuks, in dessen Gegenwart

ii) 10 bis 95 Gew.-Teile mindestens zweier Monomerkomponenten ausgewählt aus Styrol, Acrylnitril, Methylmethacrylat und α-Methylstyrol polymerisiert wurden und

B) 90 bis 5 Gew.-% eines kautschukfreien thermoplastischen Vinylharzes, aufgebaut aus

iv) 10 bis 35 Gew.-Teilen N-(2-Ethyl-6-methyl)phenylmaleinimid und v) 90 bis 65 Gew.-Teilen mindestens einer Monomerkomponente, ausgewählt aus Styrol, Acrylnitril, Methylmethacrylat und α-Methylstyrol.

**10.** Verwendung der Themoplaste bzw. der thermoplastischen Formmassen gemäß Ansprüchen 1 bis 9 zur Herstellung von Formteilen.

## Claims

**1.** Thermoplastics built up from N-(2-ethyl-6-methyl)phenylmaleimide and styrene, it being possible for all or some of the styrene to be replaced by at least one other monomer component.

**2.** Thermoplastics according to Claim 1, built up from N-(2-ethyl-6-methyl)phenylmaleimide and styrene, it being possible for all or some of the styrene to be replaced by at least one monomer component chosen from the group consisting of acrylonitrile, methyl methacrylate and α-methylstyrene, preferably built up from N-(2-ethyl-6-methyl) phenylmaleimide, styrene and acrylonitrile.

**3.** Thermoplastics according to Claim 2, built up from

a) 5 to 50 parts by weight of N-(2-ethyl-6-methyl)phenylmaleimide,

b) 20 to 90 parts by weight of styrene and

c) 5 to 40 parts by weight of acrylonitrile.

**4.** Thermoplastics according to Claim 3, built up from

a) 10 to 35 parts by weight of N-(2-ethyl-6-methyl)phenylmaleimide,

b) 30 to 75 parts by weight of styrene and

c) 10 to 30 parts by weight of acrylonitrile.

**5.** Thermoplastic moulding compositions of the ABS type, comprising

A) 10 to 100% by weight of at least one graft rubber and

B) 90 to 0% by weight of at least one rubber-free thermoplastic vinyl resin,

N-(2-ethyl-6-methyl)phenylmaleimide having been employed as one monomer component for the preparation of at least one of components A and B.

**6.** Thermoplastic moulding compositions of the ABS type according to Claim 5, comprising

A) 10 to 100% by weight of a graft rubber prepared from

i) 3 to 80 parts by weight of at least one rubber component, in the presence of which

ii) 5 to 50 parts by weight of N-(2-ethyl-6-methyl)phenylmaleimide and

iii) 95 to 50 parts by weight of at least one other monomer component chosen from the group consisting

of styrene, acrylonitrile, methyl methacrylate and α-methylstyrene have been polymerized, and

B) 90 to 0% by weight of a rubber-free thermoplastic vinyl resin built up from at least two monomer components chosen from the group consisting of styrene, acrylonitrile, methyl methacrylate and α-methylstyrene.

**7.** Thermoplastic moulding composition of the ABS type according to Claim 6, comprising

A) 10 to 100% by weight of a graft rubber prepared from

i) 5 to 70 parts by weight of at least one polybutadiene rubber, in the presence of which

ii) 10 to 35 parts by weight of N-(2-ethyl-6-methyl)phenylmaleimide and

iii) 90 to 65 parts by weight of at least one other monomer component chosen from the group consisting of styrene, acrylonitrile, methyl methacrylate and α-methylstyrene have been polymerized, and

B) 90 to 0% by weight of a rubber-free thermoplastic vinyl resin built up from at least two monomer components chosen from the group consisting of styrene, acrylonitrile, methyl methacrylate and α-methylstyrene.

**8.** Thermoplastic moulding compositions of the ABS type according to Claim 5, comprising

A) 10 to 95% by weight of a graft rubber prepared from

i) 3 to 80 parts by weight of at least one rubber component, in the presence of which

ii) 5 to 100 parts by weight of at least two monomer components chosen from the group consisting of styrene, acrylonitrile, methyl methacrylate and α-methylstyrene have been polymerized, and

B) 90 to 5% by weight of a rubber-free thermoplastic vinyl resin built up from

iv) 5 to 50 parts by weight of N-(2-ethyl-6-methyl)phenylmaleimide and

v) 95 to 50 parts by weight of at least one monomer component chosen from the group consisting of styrene, acrylonitrile, methyl methacrylate and α-methylstyrene.

**9.** Thermoplastic moulding compositions of the ABS type according to Claim 8, comprising

A) 10 to 95% by weight of a graft rubber prepared from

i) 5 to 70 parts by weight of at least one polybutadiene rubber, in the presence of which

ii) 10 to 95 parts by weight of at least two monomer components chosen from the group consisting of styrene, acrylonitrile, methyl methacrylate and α-methylstyrene have been polymerized, and

B) 90 to 5% by weight of a rubber-free thermoplastic vinyl resin built up from

iv) 10 to 35 parts by weight of N-(2-ethyl-6-methyl)phenylmaleimide and

v) 90 to 65 parts by weight of at least one monomer component chosen from the group consisting of styrene, acrylonitrile, methyl methacrylate and α-methylstyrene.

**10.** Use of the thermoplastics or the thermoplastic moulding compositions according to Claims 1 to 9 for the production of mouldings.

**Revendications**

**1.** Matières thermoplastiques constituées par du N-(2-éthyl-6-méthyl)phénylmaléimide et par du styrène, le styrène

pouvant être remplacé, en tout ou en partie, par au moins un autre composant monomère.

2. Matières thermoplastiques selon la revendication 1, constituées par du N-(2-éthyl-6-méthyl)phénylmaléimide et par du styrène, le styrène pouvant être remplacé, en tout ou en partie, par au moins un autre composant monomère choisi parmi l'acrylonitrile, le méthacrylate de méthyle et l'α-méthylstyrène, de préférence constituées par du N-(2-éthyl-6-méthyl)phénylmaléimide, par du styrène et par de l'acrylonitrile.

3. Matières thermoplastiques selon la revendication 2, constituées par

a) à raison de 5 à 50 parties en poids, du N-(2-éthyl-6-méthyl)phénylmaléimide,

b) à raison de 20 à 90 parties en poids, du styrène, et

c) à raison de 5 à 40 parties en poids, de l'acrylonitrile.

4. Matières thermoplastiques selon la revendication 3, constituées par

a) à raison de 10 à 35 parties en poids, du N-(2-éthyl-6-méthyl)phénylmaléimide,

b) à raison de 30 à 75 parties en poids, du styrène, et

c) à raison de 10 à 30 parties en poids, de l'acrylonitrile.

5. Matières à mouler thermoplastiques de type ABS contenant

A) à concurrence de 10 à 100% en poids, au moins un caoutchouc de greffage, et

B) à concurrence de 90 à 0% en poids, au moins une résine vinylique thermoplastique exempte de caoutchouc,

dans lesquelles, pour la préparation d'au moins un des composants A et B, on met en oeuvre un composant monomère, à savoir le N-(2-éthyl-6-méthyl)phénylmaléimide.

6. Matières à mouler thermoplastiques de type ABS selon la revendication 5, contenant

A) à concurrence de 10 à 100% en poids, un caoutchouc de greffage préparé à partir de

i) 3 à 80 parties en poids d'au moins un composant de caoutchouc en présence duquel on polymérise

ii) de 5 à 50 parties en poids du N-(2-éthyl-6-méthyl)phénylmaléimide, et

iii) de 95 à 50 parties en poids d'au moins un autre composant monomère choisi parmi le styrène, l'acrylonitrile, le méthacrylate de méthyle et l'α-méthylstyrène, et

B) à concurrence de 90 à 0% en poids, une résine vinylique thermoplastique exempte de caoutchouc constituée par au moins deux composants monomères choisis parmi le styrène, l'acrylonitrile, le méthacrylate de méthyle et l'α-méthylstyrène.

7. Matière à mouler thermoplastique de type ABS selon la revendication 6, contenant

A) à concurrence de 10 à 100% en poids, un caoutchouc de greffage préparé à partir de

i) 5 à 70 parties en poids d'au moins un caoutchouc de polybutadiène en présence duquel on polymérise

ii) de 10 à 35 parties en poids du N-(2-éthyl-6-méthyl)phénylmaléimide, et

iii) de 90 à 65 parties en poids d'au moins un autre composant monomère choisi parmi le styrène, l'acrylonitrile, le méthacrylate de méthyle et l'α-méthylstyrène, et

B) à concurrence de 90 à 0% en poids, une résine vinylique thermoplastique exempte de caoutchouc constituée par au moins deux composants monomères choisis parmi le styrène, l'acrylonitrile, le méthacrylate de méthyle et l'α-méthylstyrène.

**8.** Matières à mouler thermoplastiques de type ABS selon la revendication 5, contenant

A) à concurrence de 10 à 95% en poids, un caoutchouc de greffage préparé à partir de

i) 3 à 80 parties en poids d'au moins un composant de caoutchouc en présence duquel on polymérise

ii) de 5 à 100 parties en poids d'au moins deux composants monomères choisis parmi le styrène, l'acrylonitrile, le méthacrylate de méthyle et l'α-méthylstyrène, et

B) à concurrence de 90 à 5% en poids, une résine vinylique thermoplastique exempte de caoutchouc constituée par

iv) de 5 à 50 parties en poids du N-(2-éthyl-6-méthyl) phénylmaléimide, et

v) de 95 à 50 parties en poids d'au moins un composant monomère choisi parmi le styrène, l'acrylonitrile, le méthacrylate de méthyle et l'α-méthylstyrène.

**9.** Matières à mouler thermoplastiques de type ABS selon la revendication 8, contenant

A) à concurrence de 10 à 95% en poids, un caoutchouc de greffage préparé à partir de

i) 5 à 70 parties en poids d'au moins un caoutchouc de polybutadiène en présence duquel on polymérise

ii) de 10 à 95 parties en poids d'au moins deux composants monomères choisis parmi le styrène, l'acrylonitrile, le méthacrylate de méthyle et l'α-méthylstyrène, et

B) à concurrence de 90 à 5% en poids, une résine vinylique thermoplastique exempte de caoutchouc constituée par

iv) de 10 à 35 parties en poids du N-(2-éthyl-6-méthyl)phénylmaléimide, et

v) de 90 à 65 parties en poids d'au moins un composant monomère choisi parmi le styrène, l'acrylonitrile, le méthacrylate de méthyle et l'α-méthylstyrène.

**10.** Utilisation des matières thermoplastiques, respectivement des matières à mouler thermoplastiques selon les revendications 1 à 9 pour la fabrication d'éléments moulés.